# EUROPEAN PATENT SPECIFICATION

(11) **EP 3 999 284 B1**
(45) Date of publication and mention of the grant of the patent: **14.06.2023**
(21) Application number: 20731592.0
(22) Date of filing: 04.06.2020
(51) Int. Cl.: B25J 9/00, A61H 1/02, B25J 19/00

(54) **EXOSKELETON FOR SUPPORTING A USER'S ARM**
EXOSKELETT ZUR UNTERSTÜTZUNG EINES BENUTZERARMS
EXOSQUELETTE PERMETTANT DE SUPPORTER LE BRAS D'UN UTILISATEUR

(30) Priority: 15.07.2019 NL 2023503
(43) Date of publication of application: 25.05.2022
(73) Proprietor: Yumen Bionics B.V., 1095 MA Amsterdam (NL)
(72) Inventor: PAALMAN, Micha Ilan, 1095 MA Amsterdam (NL); SPIES, Heero David Egidius, 1095 MA Amsterdam (NL); KOK, Sjaak, 1095 MA Amsterdam (NL)
(74) Representative: van Breda, Jacobus
(86) International application number: PCT/NL2020/050360
(87) International publication number: WO 2021/010821

(56) References cited:
- WO-A1-2017/197424
- CN-A- 104 021 704
- CN-A- 107 334 602
- CN-A- 107 736 983
- CN-A- 109 009 875
- KR-A- 20180 123 939
- US-A1- 2018 361 565
- GUNN MARGARET ET AL: "User Evaluation of a Dynamic Arm Orthosis for People With Neuromuscular Disorders", IEEE TRANSACTIONS ON NEURAL SYSTEMS AND REHABILITATIONENGINEERING, IEEE SERVICE CENTER, NEW YORK, NY, US, vol. 24, no. 12, 1 December 2016 (2016-12-01), pages 1277-1283, XP011635958, ISSN: 1534-4320, DOI: 10.1109/TNSRE.2015.2492860 [retrieved on 2016-12-06]

## Description

The invention relates to an exoskeleton for supporting a user's arm, comprising a supporting frame that supports an up-and-down movable standard on which a horizontally movable arm is mounted.

US 8,641,782 discloses such an exoskeleton which compensates for gravity. The known exoskeleton comprises at least five joints, wherein two joints may be driven by actuators, and the remaining joints may be driven by user force.

AT 517255 A1 discloses an arm exoskeleton for the motorized movement of an arm, with several modules and several drives for moving a plurality of joints of the arm.

US 9,358,173 discloses a multi-axis robotic arm having first to eight arm segments, and a high-precision control system for controlling movements of the multi-axis robotic arm. The control system provides an active, a passive and an auxiliary mode; receives and computes information about a patient's movements and muscle force detected by potentiometers and force sensors provided in the multi-axis robotic arm; and accordingly, drives actuators to apply an aiding force or a resisting force to assist the patient in completing rehabilitation exercises.

US2010/0249673 discloses a system for arm therapy comprising a first drive that can be fixedly connected to an element determining the position of a user and rotationally driving, about a first axis, a part of the arm therapy system which can be connected to an upper arm module. The driven part of the arm therapy system comprises a second drive adapted to rotationally drive said upper arm module about a second axis, wherein said second axis is oriented orthogonal to the first axis. The system can provide a statically determined exoskeleton with correct anatomical axes and misaligned technical axes.

WO95/32842 discloses an external apparatus for attachment to a limb of an user and having a selected number of degrees-of-freedom for applying torques to the limb comprising: at least one remote center drive associated with one of the selected number of degrees-of-freedom, wherein the remote center drive is adapted to generate torques on the limb remotely from the center of rotation of the selected degree of freedom.

KR 2018 0123939; CN 107 736 983; and CN 104 021 704 each disclose an exoskeleton for supporting a user's arm, comprising a supporting frame that supports an up-and-down movable standard on which a horizontally movable arm is mounted, wherein the horizontally movable arm carries a back support and a supporting arm construction for supporting the user's arm.

It is an object of the invention to provide an exoskeleton which can accurately follow the natural movements of an arm of the user.

It is a further object of the invention to provide an exoskeleton which substantially balances the weight of the arm of the user.

It is still a further object of the invention to provide that the exoskeleton is as much as possible self-supporting without bearing on the body of the user.

The exoskeleton of the invention has the features of one or more of the appended claims.

In a first aspect of the invention the horizontally movable arm is articulated to enable that the exoskeleton can follow all natural movements of the user.

The back support on the horizontally movable arm can in one embodiment be a shoulder plate which accurately positions the supporting arm construction in relation to the users arm, and which promotes that the supporting arm construction can accurately follow the natural arm movements of the user.

To promote the capability of the exoskeleton to follow the natural movements of the user, it is preferred that the supporting arm construction is articulated and extendable so as to tailor the arm construction to the users arm dimensions.

Further it is preferred that the supporting arm construction has two limbs that connect to each other with a hinge, and that on opposite sides of the hinge the limb that is farthest away from the back support connects to counterbalancing springs that on their opposite sides connect to the upper limb and directly or indirectly to the horizontally movable arm. The counterbalancing springs are important for reducing the weight of the user's own arm that has to be compensated by the user himself.

Preferably the limb that is farthest away from the at least one back support supports an flexible arm sleeve. With such an flexible arm sleeve a play free connection with an users arm can be secured.

It is further preferred that the limb that is farthest away from the at least one back support is provided with an attached gripping flap. Such a gripping flap is very helpful when support of the users arm is required.

Advantageously the limb that is farthest away from the back support is provided with a brace that extends above the flexible arm sleeve. The brace secures the dimensional fit of the flexible arm sleeve, and in particular the construction of the lower limb of the arm construction.

The up-and-down movability of the standard can be realized in different ways. In one embodiment the up-and-down movable standard is supported through a parallelogram mechanism by the supporting frame.

It is then preferred that the parallelogram mechanism has guide wheels that guide a tension wire so as to provide a weight compensating upward force to the parallelogram mechanism.

Suitably the tension wire has two extremities, and connects on a first extremity of the two extremities to a spring mounted on the frame.

It is preferable that on a second extremity of the two extremities the tension wire connects to an adjustment knob, which makes adaptation to the requirements of a particular situation easy.

In another embodiment which may have preference because of the size reduction that is possible, the up-and-down movable standard is guided in a linear bearing mounted in the supporting frame.

Also then the up-and-down movable standard is preferably connected with a tension wire that connects to a spring mounted on the up-and-down movable standard.

In one embodiment the tension wire is guided over at least one guide wheel, wherein said at least one guide wheel is mounted on a swivel arm which has a hinge that connects to the up-and-down movable standard and which swivel arm connects with a link to the supporting frame at a position distant from the hinge so as to fix said position in vertical direction with reference to the supporting frame.

In this embodiment it is preferred that at a position distant from the spring, the tension wire is connected to an adjustment mechanism for adjusting a tension in the tension wire.

In still another embodiment the tension wire is guided over at least one guide wheel, wherein said at least one guide wheel is mounted on the standard, which standard connects to a swivel and slide arm which has a hinge distant from the standard that connects to the supporting frame so as to fix said hinge with reference to the supporting frame.

Suitably the supporting arm construction for the users arm is mounted on the horizontally movable arm through an intermediate shoulder hinge and adapter, which shoulder hinge and adapter comprises two articulate bended linkages that interconnect with a central hinge, and wherein said bended linkages on their respective sides distant from the central hinge are each provided with a further hinge that provides a swivable connection with the horizontally movable arm and the supporting arm construction, respectively. This further promotes the adaptation of the exoskeleton to the natural posture that a user can assume.

Preferably the said hinges are lockable, to enable easy mounting or dismounting of the exoskeleton to a user.

In particular situations where a user needs his two arms to be supported by an exoskeleton, it is desirable that the exoskeleton is provided with two standards, horizontal movable arms, and supporting arm constructions that are provided on the supporting frame in mirror image, and at least one back support so as to provide that the exoskeleton can indeed support two arms of the user.

Preferably then the two horizontal arms that support the at least one back support are connected to each other with a back connector. This secures the stability of the exoskeleton and adaptation to the user during use.

Preferably the back connector has an adjustable length to be able to tailor the exoskeleton to the user.

A further preferable feature is that the spring that connects the limb that is farthest away from the at least one back support, to the horizontally movable arm has an Y-shape wherein the branches of the Y connect to the limb, and the other side of the Y connects to the horizontally movable arm. This promotes stability and reduces the risk that breakage of the spring will lead to a collapsing exoskeleton.

Finally it is remarked that the exoskeleton only comprises passive components, which is a competitive advantage over prior art solutions.

The invention will hereinafter be further elucidated with reference to a drawing of non-limiting exemplary embodiments of the exoskeleton in accordance with the invention.

In the drawing:
- figures 1, 2A, 2B and 3 show an exoskeleton of the invention in a frontal view, isometric view and side view, respectively;
- figures 4, 5 and 6 show back sides of three different embodiments of the exoskeleton of the invention;
- figures 7 and 8 show a detailed view at one embodiment of the exoskeleton of the invention;
- figures 9 and 10 show a detailed view at a second embodiment of the exoskeleton of the invention;
- figures 11 and 12 show a detailed view at a third embodiment of the exoskeleton of the invention;
- figure 13 shows a detailed view at the shoulder construction of the exoskeleton of the invention; and
- figure 14 shows one of the springs that is used in the exoskeleton of the invention.

Whenever in the figures the same reference numerals are applied, these numerals refer to the same parts.

In the figures and the following discussion the exoskeleton will be shown as having two standards, two horizontal movable arms, one or two back supports, and two supporting arm constructions that are provided on the supporting frame in mirror image, so as to provide that the exoskeleton can support two arms of an user. The skilled person will understand that for that purpose also other features that relate to supporting two arms of a user will be present in twofold, as the situation may require. It is however also feasible that the exoskeleton only provides a single standard, a single horizontally movable arm, a single back support, and a single supporting arm construction to provide support to only one user's arm. To avoid any doubt it is remarked that it is not feasible that the exoskeleton will be embodied with three standards etc. It is further remarked that the exoskeleton of the invention only comprises passive components and preferably avoids all motorization. It is found that the exoskeleton of the invention is particularly suitable for use by male persons suffering from Duchenne muscular dystrophy (nature discriminates between the sexes). According to Wikipedia Duchenne muscular dystrophy is a severe type of muscular dystrophy. The symptom of muscle weakness usually begins around the age of four in boys and worsens quickly. Typically muscle loss occurs first in the thighs and pelvis followed by those of the arms. This can result in trouble standing up. Most are unable to walk by the age of 12.

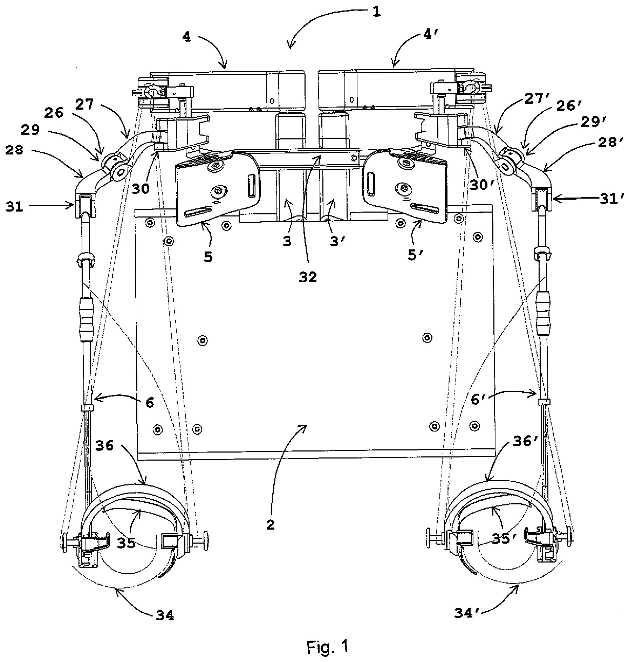

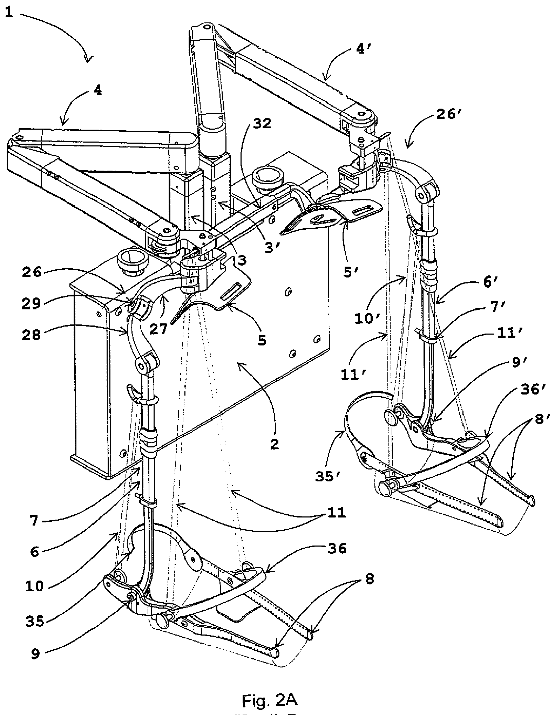

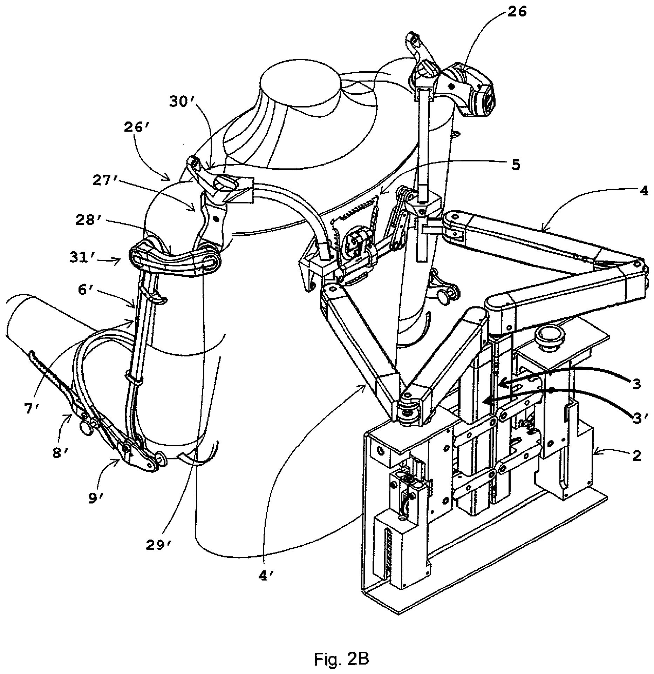

With reference first to figures 1, 2A, 2B and 3 an exoskeleton 1 of the invention is shown in a frontal view, an isometric frontal view, an isometric back view, and a side view, respectively. The difference between figure 2A and figure 2B is that the embodiment of figure 2A has two back supports 5, whereas the embodiment of figure 2B only has a single back support 5. The exoskeleton 1 is used for supporting at least one arm of an user, and comprises a supporting frame 2 that supports an up-and-down movable standard 3, 3' on which a horizontally movable arm 4, 4' is mounted.

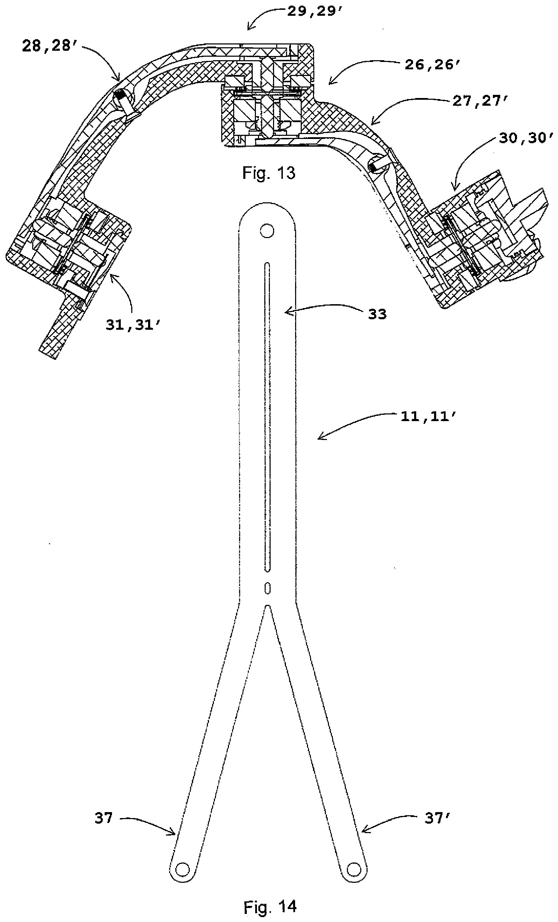

On the horizontally movable arm 4, 4' at least one back support 5, 5' is (indirectly) mounted as well as a supporting arm construction 6, 6' for supporting the user's arm. The supporting arm construction 6, 6' for the users arm is mounted on the horizontally movable arm 3, 3' through an intermediate shoulder hinge and adapter 26, 26' which is in detail shown in figure 13. Figure 13 shows that the shoulder hinge and adapter 26, 26' comprises two articulate bended linkages 27, 28; 27', 28' that interconnect with a central hinge 29, 29' and wherein said bended linkages 27, 28; 27', 28' on their respective sides distant from the central hinge 29, 29' are each provided with a further hinge 30, 31; 30', 31' that provides a swivable connection with the horizontally movable arm 4, 4' and the supporting arm construction 6, 6' for the user's arm, respectively. The hinges are all lockable to assist during donning and doffing of the exoskeleton.

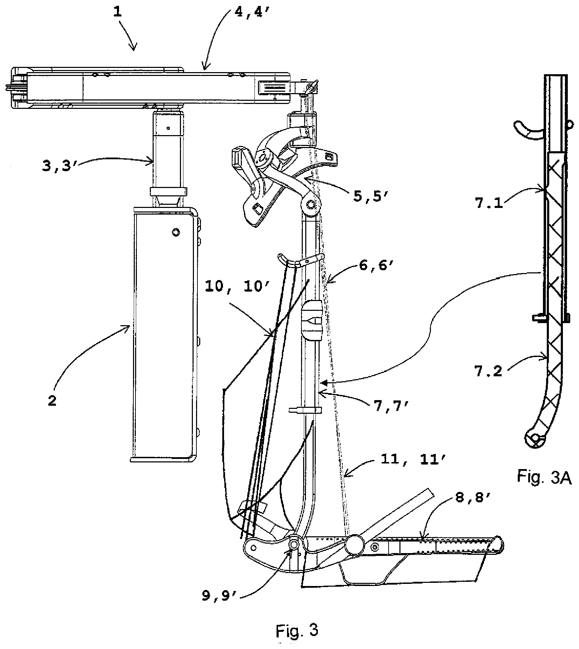

Turning back to figures 1 - 3, it is shown that the supporting arm construction 6, 6' is articulated and extendable so as to tailor the arm construction 6, 6' to the users arm dimensions. For this purpose an upper limb 7, 7' of the supporting arm construction 6, 6' comprises two telescopically extendable tubes 7.1, 7.2 as clearly shown in fig. 3a.

As is best shown in figures 2A/2B and 3, the supporting arm construction 6, 6' has an upper limb 7, 7' and a lower limb 8, 8' that connect to each other with a hinge 9, 9'. Figures 2A and 3 show that on opposite sides of the hinge 9, 9' the lower limb 8, 8' that is farthest away from the at least one back support 5, 5' connects to counterbalancing springs 10, 11; 10', 11' that on their opposite sides connect to the upper limb 7, 7' and directly or indirectly to the horizontally movable arm 4, 4', respectively. Figure 14 shows the spring 11, 11' that connects the lower limb 8, 8' that is farthest away from the at least one back support 5, 5' to the horizontally movable arm 4, 4'. It shows that the spring 11, 11' has an Y-shape wherein the branches 37, 37' of the Y connect to the lower limb 8, 8' and the other side 33 of the Y connects to the horizontally movable arm 4, 4'.

Figure 1 and figures 2A/2B show that the limb 8, 8' that is farthest away from the at least one back support 5, 5' supports an flexible arm sleeve 34, 34'. This limb 8, 8' is further provided with an attached gripping flap 35, 35', and further with a brace 36, 36' that extends above the flexible arm sleeve 34, 34'.

Figures 2A and 2B provide a best view to show that the horizontally movable arm 4, 4' is articulated.

Figure 1 and figures 2A and 2B further show that the two horizontal arms 4, 4' that support the at least one back support 5, 5' are connected to each other with a back connector 32, which preferably has an adjustable length.

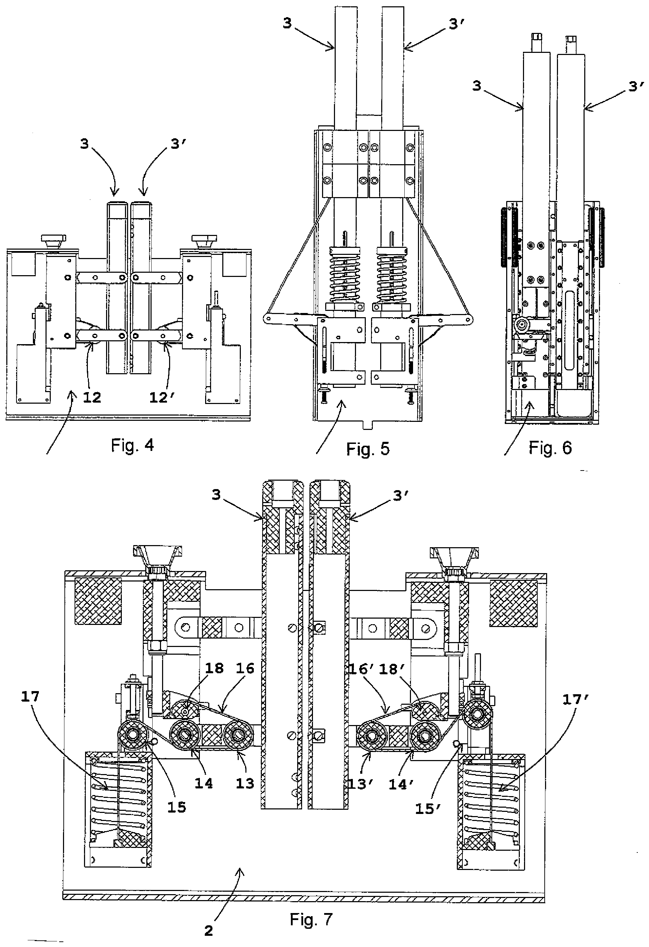

Turning now to a first embodiment of a construction by which the standard 3, 3' is supported by the frame 2, reference is made to figures 4, 7, and 8, wherein it is shown that the up-and-down movable standard 3, 3' is supported through a parallelogram mechanism 12, 12' by the supporting frame 2.

In figure 7 it is shown that the parallelogram mechanism 12, 12' has guide wheels 13-15, 13'-15' that guide a tension wire 16, 16' so as to provide an upward force to the parallelogram mechanism 12, 12'. The tension wire 16, 16' has two extremities, and connects on a first extremity of the two extremities to a spring 17, 17' mounted on the frame 2. On a second extremity of the two extremities the tension wire 16, 16' connects to an adjustment knob 18, 18' for adjusting the tension in the wire 16, 16'.

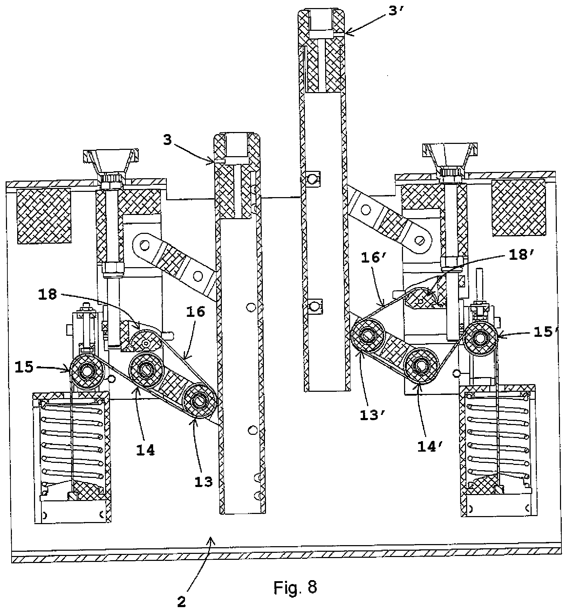

Figure 8 shows the up-and-down movability of the standards 3, 3' as supported according to the first embodiment, wherein on the left the standard 3 is moved to a lowermost position, and on the right the standard 3' is moved to a highest position.

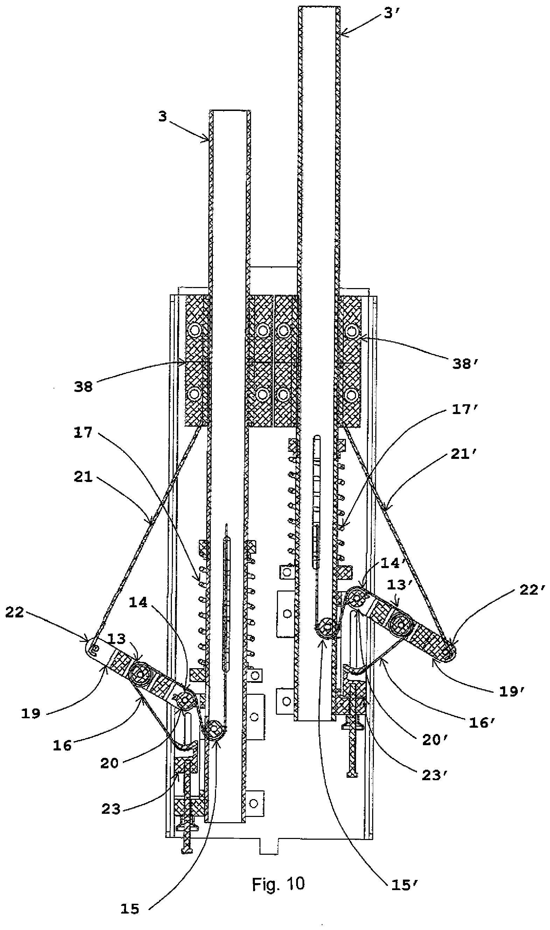

With reference to figures 5, 9 and 10 a second embodiment is shown pertaining to a construction wherein the standard 3, 3' is supported by the frame 2. In this second embodiment the up-and-down movable standard 3, 3' is guided in a linear bearing 38, 38' mounted in the supporting frame 2. Here the up-and-down movable standard 3, 3' is balanced with a tension wire 16, 16' that connects to a spring 17, 17' mounted on the up-and-down movable standard 3, 3'. The tension wire 16, 16' is guided over at least one guide wheel 13, 13', wherein said at least one guide wheel 13, 13' is mounted on a swivel arm 19, 19' which has a hinge 20, 20' that connects to the up-and-down movable standard 3, 3', and which swivel arm 19, 19' connects further with a rigid link 21, 21' to the supporting frame 2 at a position 22, 22' distant from the hinge 20, 20' so as to fix said position 22, 22' with reference to the supporting frame 2. This is visually illustrated in figure 10 wherein the left standard 3 is moved to a lowermost position, and the right standard 3' is moved to a highest position, and wherein the positions 22, 22' at which the connections are made between the links 21, 21' and the swivel arms 19, 19' are maintained at essentially the same altitude with reference to the frame 2.

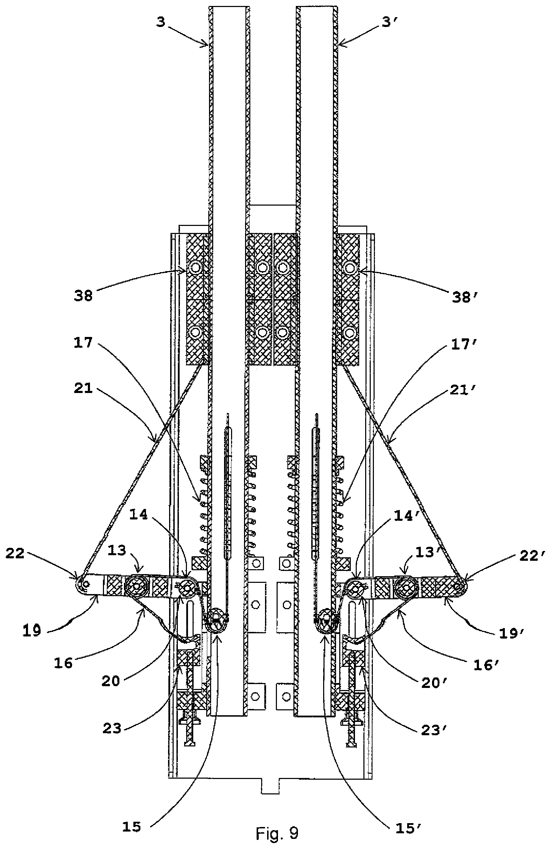

Figures 9 and 10 also show that at a position distant from the spring 17, 17' the tension wire 16, 16' is connected to an adjustment mechanism 23, 23' for adjusting a tension in the tension wire 16, 16'.

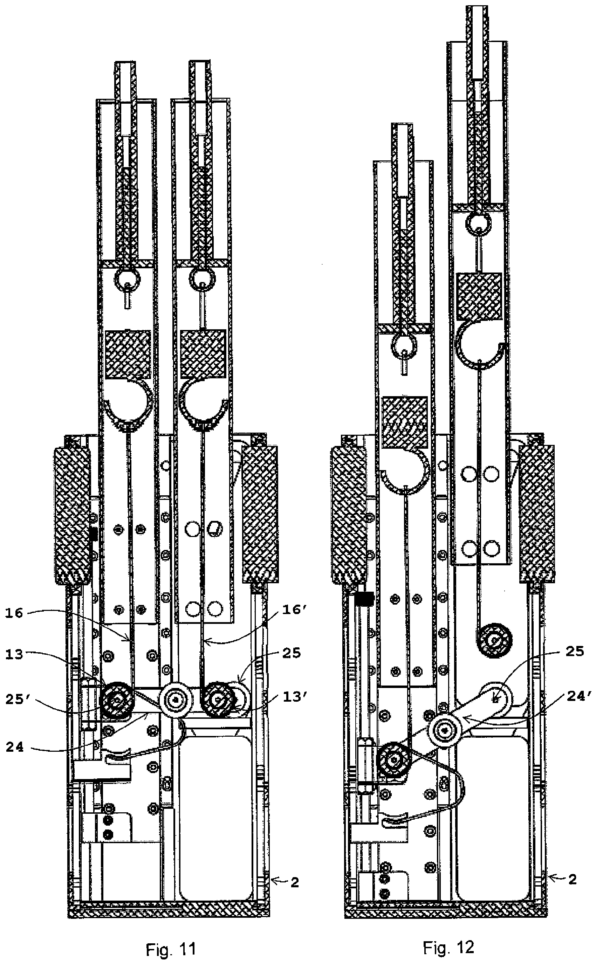

A third embodiment is shown with reference to figures 6, 11 and 12. In this third embodiment the tension wire 16, 16' is guided over at least one guide wheel 13, 13', wherein said at least one guide wheel 13, 13' is mounted on the standard 3, 3', wherein said standard 3, 3' connects to a swivel and slide arm 24, 24' which has a hinge 25, 25' distant from the standard 3, 3' that connects to the supporting frame 2 so as to fix said hinge 25, 25' in altitude with reference to the supporting frame 2.

Although the invention has been discussed in the foregoing with reference to exemplary embodiments of the exoskeleton of the invention, the invention is not restricted to these particular embodiments which can be varied in many ways without departing from the invention. The discussed exemplary embodiments shall therefore not be used to construe the appended claims strictly in accordance therewith. On the contrary the embodiments are merely intended to explain the wording of the appended claims without intent to limit the claims to these exemplary embodiments. The scope of protection of the invention shall therefore be construed in accordance with the appended claims only, wherein a possible ambiguity in the wording of the claims shall be resolved using these exemplary embodiments.

## Claims

1. Exoskeleton (1) for supporting a user's arm, comprising a supporting frame (2) that supports an up-and-down movable standard (3, 3') on which a horizontally movable arm (4, 4') is mounted, wherein the horizontally movable arm (4, 4') carries a back support (5, 5') and a supporting arm construction (6, 6') for supporting the user's arm, **characterized in that** the horizontally movable arm (4, 4') is articulated.

2. Exoskeleton according to claim 1, **characterized in that** the supporting arm construction (6, 6') is articulated and extendable so as to tailor the arm construction (6, 6') to the users arm dimensions.

3. Exoskeleton according to claim 1 or 2, **characterized in that** the supporting arm construction (6, 6') has two limbs (7, 8; 7', 8') that connect to each other with a hinge (9, 9'), and that on opposite sides of the hinge (9, 9') the limb (8, 8') that is farthest away from the at least one back support (5, 5') connects to counterbalancing springs (10, 11; 10', 11') that on their opposite sides connect to the upper limb (7, 7') and directly or indirectly to the horizontally movable arm (4, 4').

4. Exoskeleton according to claim 3, **characterized in that** the limb (8, 8') that is farthest away from the at least one back support (5, 5') supports a flexible arm sleeve (34, 34') and/ or said limb (8, 8') is provided with an attached gripping flap (35, 35') and/or said limb (8, 8') is provided with a brace (36, 36') that extends above the flexible arm sleeve (34, 34').

5. Exoskeleton according to any one of claims 1 - 4, **characterized in that** the up-and-down movable standard (3, 3') is supported through a parallelogram mechanism (12, 12') by the supporting frame (2), and that preferably the parallelogram mechanism (12, 12') has a guide wheel or guide wheels (13, 14, 15; 13', 14', 15') that guide a tension wire (16, 16') so as to provide an upward force to the parallelogram mechanism (12, 12').

6. Exoskeleton according to claim 5, **characterized in that** the tension wire (16, 16') has two extremities, and connects on a first extremity of the two extremities to a spring (17, 17') mounted on the frame (2), and that on a second extremity of the two extremities the tension wire (16, 16') connects to an adjustment knob (18, 18').

7. Exoskeleton according to any one of claims 1 - 6, **characterized in that** the up-and-down movable standard (3, 3') is guided in a linear bearing (34, 34') mounted to the supporting frame (2), wherein preferably the up-and-down movable standard (3, 3') is connected with a tension wire (16, 16') that connects to a spring (17, 17') mounted on the up-and-down movable standard (3, 3').

8. Exoskeleton according to claim 7, **characterized in that** the tension wire (16, 16') is guided over at least one guide wheel (13, 14, 15; 13', 14', 15'), wherein said at least one guide wheel is mounted on a swivel arm (19, 19') which has a hinge (20, 20') that connects to the up-and-down movable standard (3, 3') and which swivel arm (19, 19') connects with a link (21, 21') to the supporting frame (2) at a position (22, 22') distant from the hinge (20, 20') so as to essentially fix said position (22, 22') in vertical direction with reference to the supporting frame (2), wherein preferably at a position distant from the spring (17, 17') the tension wire (16, 16') is connected to an adjustment mechanism (23, 23') for adjusting a tension in the tension wire (16, 16').

9. Exoskeleton according to claim 7, **characterized in that** the tension wire (16, 16') is guided over at least one guide wheel (13, 13'), wherein said at least one guide wheel (13, 13') is mounted on the standard (3, 3'), which standard connects to a swivel and slide arm (24, 24') which has a hinge (25, 25') distant from the standard (3, 3') that connects to the supporting frame (2) so as to fix said hinge (25, 25') with reference to the supporting frame (2).

10. Exoskeleton according to any one of the claims 1 - 9, **characterized in that** the supporting arm construction (6, 6') for the users arm is mounted on the horizontally movable arm (4, 4') through an intermediate shoulder hinge and adapter (26, 26'), which shoulder hinge and adapter (26, 26') comprises two articulate bended linkages (27, 28; 27', 28') that interconnect with a central hinge (29, 29'), and wherein said bended linkages (27, 28; 27', 28') on their respective sides distant from the central hinge (29, 29') are each provided with a further hinge (30, 31; 30', 31') that provides a swivable connection with the horizontally movable arm (4, 4') and the supporting arm construction (6, 6'), respectively, wherein the hinges are preferably lockable.

11. Exoskeleton according to any one of claims 1 - 10, **characterized in that** the exoskeleton is provided with two standards, horizontal movable arms, and supporting arm constructions that are provided on the supporting frame in mirror image, and at least one back support so as to provide that the exoskeleton can support two arms of the user.

12. Exoskeleton according to claim 11, **characterized in that** the two horizontal arms (4, 4') support the at least one back support (5, 5'), and are connected to each other with a back connector (32).

13. Exoskeleton according to claim 12, **characterized in that** the back connector (32) has an adjustable length.

14. Exoskeleton according to any one of claims 3 - 13, **characterized in that** the spring (11, 11') that connects the limb (8, 8') that is farthest away from the back support (5, 5') to the horizontally movable arm (4, 4') has an Y-shape wherein the branches (37, 37') of the Y connect to the limb (8, 8') and the other side (33) of the Y connects to the horizontally movable arm (4, 4').

15. Exoskeleton according to any one of claims 1 - 14, **characterized in that** the exoskeleton (1) only comprises passive components.

## Patentansprüche

1. Exoskelett (1) zum Stützen eines Arms eines Benutzers, umfassend einen Stützrahmen (2), der eine auf und ab bewegbare Stange (3, 3') trägt, an dem ein horizontal beweglicher Arm (4, 4') angebracht ist, wobei der horizontal bewegliche Arm (4, 4') eine Rückenstütze (5, 5') und eine Stützarmkonstruktion (6, 6') zum Stützen des Arms des Benutzers trägt, **dadurch gekennzeichnet, dass** der horizontal bewegliche Arm (4, 4') gelenkig ist.

2. Exoskelett gemäß Anspruch 1, **dadurch gekennzeichnet, dass** die Stützarmkonstruktion (6, 6') gelenkig und ausziehbar ist, um die Armkonstruktion (6, 6') an die Armabmessungen des Benutzers anzupassen.

3. Exoskelett gemäß Anspruch 1 oder 2, **dadurch gekennzeichnet, dass** die Stützarmkonstruktion (6, 6') zwei Schenkel (7, 8; 7', 8') aufweist, die über ein Scharnier (9, 9') miteinander verbunden sind, und dass auf gegenüberliegenden Seiten des Scharniers (9, 9') der von der mindestens einen Rückenstütze (5, 5') am weitesten entfernte Schenkel (8, 8') mit Ausgleichsfedern (10, 11; 10', 11'), die auf ihren gegenüberliegenden Seiten mit dem oberen Schenkel (7, 7') und direkt oder indirekt mit dem horizontal beweglichen Arm (4, 4') verbunden sind.

4. Exoskelett gemäß Anspruch 3, **dadurch gekennzeichnet, dass** der von der mindestens einen Rückenstütze (5, 5') am weitesten entfernte Schenkel (8, 8') eine flexible Armmanschette (34, 34') trägt und/oder der Schenkel (8, 8') mit einer angebrachten Greiflasche (35, 35') bereitgestellt ist und/oder der Schenkel (8, 8') mit einer sich über die flexible Armmanschette (34, 34') erstreckenden Strebe (36, 36') bereitgestellt ist.

5. Exoskelett gemäß einem der Ansprüche 1-4, **dadurch gekennzeichnet, dass** die auf und ab bewegbare Stange (3, 3') über einen Parallelogramm-Mechanismus (12, 12') vom Stützrahmen (2) getragen wird, und dass bevorzugt der Parallelogramm-Mechanismus (12, 12') ein Führungsrad oder Führungsräder (13, 14, 15; 13', 14', 15') aufweist, die einen Spanndraht (16, 16') so führen, dass eine Aufwärtskraft auf den Parallelogramm-Mechanismus (12, 12') bereitgestellt wird.

6. Exoskelett gemäß Anspruch 5, **dadurch gekennzeichnet, dass** der Spanndraht (16, 16') zwei Enden aufweist, und an einem ersten Ende der beiden Enden mit einer am Rahmen (2) montierten Feder (17, 17') verbunden ist, und dass der Spanndraht (16, 16') an einem zweiten Ende der beiden Enden mit einem Einstellknopf (18, 18') verbunden ist.

7. Exoskelett gemäß einem der Ansprüche 1-6, **dadurch gekennzeichnet, dass** die auf und ab bewegbare Stange (3, 3') in einem am Stützrahmen (2) angebrachten Linearlager (34, 34') geführt ist, wobei bevorzugt die auf und ab bewegbare Stange (3, 3') mit einem Spanndraht (16, 16') verbunden ist, der mit einer an der auf und ab bewegbaren Stange (3, 3') angebrachten Feder (17, 17') verbunden ist.

8. Exoskelett gemäß Anspruch 7, **dadurch gekennzeichnet, dass** der Spanndraht (16, 16') über mindestens ein Führungsrad (13, 14, 15; 13', 14', 15') geführt wird, wobei das mindestens eine Führungsrad an einem Schwenkarm (19, 19') angebracht ist, der ein Scharnier (20, 20') aufweist, das mit der auf und ab bewegbaren Stange (3, 3') verbunden ist, und wobei der Schwenkarm (19, 19') mit einer Verbindung (21, 21') mit dem Stützrahmen (2) an einer von dem Scharnier (20, 20') entfernten Position (22, 22') verbunden ist, um die Position (22, 22') in vertikaler Richtung in Bezug auf den Stützrahmen (2) im Wesentlichen zu fixieren, wobei der Spanndraht (16, 16') bevorzugt an einer von der Feder (17, 17') entfernten Position mit einem Einstellmechanismus (23, 23') zum Einstellen einer Spannung in dem Spanndraht (16, 16') verbunden ist.

9. Exoskelett gemäß Anspruch 7, **dadurch gekennzeichnet, dass** der Spanndraht (16, 16') über mindestens ein Führungsrad (13, 13') geführt ist, wobei das mindestens eine Führungsrad (13, 13') an der Stange (3, 3') angebracht ist, wobei die Stange mit einem Schwenk- und Gleitarm (24, 24') verbunden ist, der ein von der Stange (3, 3') entferntes Scharnier (25, 25') aufweist, das mit dem Stützrahmen (2) verbunden ist, um das Scharnier (25, 25') in Bezug auf den Stützrahmen (2) zu fixieren.

10. Exoskelett gemäß einem der Ansprüche 1-9, **dadurch gekennzeichnet, dass** die Stützarmkonstruktion (6, 6') für den Arm des Benutzers an dem horizontal beweglichen Arm (4, 4') über ein dazwischenliegendes Schultergelenk und einen Adapter (26, 26') angebracht ist, wobei das Schultergelenk und der Adapter (26, 26') zwei gelenkige gebogene Verbindungen (27, 28; 27, 28; 27', 28') umfasst, die mit einem zentralen Scharnier (29, 29') verbunden sind, und wobei die gebogenen Verbindungen (27, 28; 27', 28') auf ihren jeweiligen vom zentralen Scharnier (29, 29') entfernten Seiten jeweils mit einem weiteren Scharnier (30, 31; 30', 31') bereitgestellt sind, das eine schwenkbare Verbindung mit dem horizontal beweglichen Arm (4, 4') bzw. der Stützarmkonstruktion (6, 6') bereitstellt, wobei die Scharniere bevorzugt verriegelbar sind.

11. Exoskelett gemäß einem der Ansprüche 1-10, **dadurch gekennzeichnet, dass** das Exoskelett mit zwei Stangen, horizontal beweglichen Armen, und Stützarmkonstruktionen, die spiegelbildlich am Stützrahmen bereitgestellt sind, und mindestens einer Rückenstütze bereitgestellt ist, so dass das Exoskelett zwei Arme des Benutzers stützen kann.

12. Exoskelett gemäß Anspruch 11, **dadurch gekennzeichnet, dass** die beiden horizontalen Arme (4, 4') die mindestens eine Rückenstütze (5, 5') tragen und mit einem Rückenverbinder (32) miteinander verbunden sind.

13. Exoskelett gemäß Anspruch 12, **dadurch gekennzeichnet, dass** der Rückenverbinder (32) eine einstellbare Länge aufweist.

14. Exoskelett gemäß einem der Ansprüche 3-13, **dadurch gekennzeichnet, dass** die Feder (11, 11'), die den am weitesten von der Rückenstütze (5, 5') entfernten Schenkel (8, 8') mit dem horizontal beweglichen Arm (4, 4') verbindet, eine Y-Form aufweist, wobei die Zweige (37, 37') des Y mit dem Schenkel (8, 8') und die andere Seite (33) des Y mit dem horizontal beweglichen Arm (4, 4') verbunden ist.

15. Exoskelett gemäß einem der Ansprüche 1-14, **dadurch gekennzeichnet, dass** das Exoskelett (1) nur passive Komponenten umfasst.

## Revendications

1. Exosquelette (1) pour supporter le bras d'un utilisateur, comprenant un bâti de support (2) qui supporte un montant mobile de haut en bas (3, 3') sur lequel un bras horizontalement mobile (4, 4') est monté, dans lequel le bras horizontalement mobile (4, 4') porte un support de dos (5, 5') et une construction de bras de support (6, 6') pour supporter le bras de l'utilisateur, **caractérisé en ce que** le bras horizontalement mobile (4, 4') est articulé.

2. Exosquelette selon la revendication 1, **caractérisé en ce que** la construction de bras de support (6, 6') est articulée et extensible afin de personnaliser la construction de bras (6, 6') aux dimensions du bras de l'utilisateur.

3. Exosquelette selon la revendication 1 ou 2, **caractérisé en ce que** la construction de bras de support (6, 6') a deux membres (7, 8 ; 7', 8') qui se raccordent entre eux avec une charnière (9, 9'), et **en ce que**, sur les côtés opposés de la charnière (9, 9'), le membre (8, 8') qui est le plus éloigné de l'au moins un support de dos (5, 5') se raccorde à des ressorts d'équilibrage (10, 11 ; 10', 11') qui, sur leurs côtés opposés, se raccordent au membre supérieur (7, 7') et directement ou indirectement au bras horizontalement mobile (4, 4').

4. Exosquelette selon la revendication 3, **caractérisé en ce que** le membre (8, 8') qui est le plus éloigné de l'au moins un support de dos (5, 5') supporte un manchon de bras flexible (34, 34') et/ou ledit membre (8, 8') est prévu avec un rabat de préhension fixé (35, 35') et/ou ledit membre (8, 8') est prévu avec une entretoise (36, 36') qui s'étend au-dessus du manchon de bras flexible (34, 34').

5. Exosquelette selon l'une quelconque des revendications 1-4, **caractérisé en ce que** le montant mobile de haut en bas (3, 3') est supporté par le biais d'un mécanisme à parallélogramme (12, 12') par le bâti de support (2), et **en ce que** de préférence le mécanisme à parallélogramme (12, 12') a une roue de guidage ou des roues de guidage (13, 14, 15 ; 13', 14', 15') qui guident un fil de tension (16, 16') afin de fournir une force ascendante au mécanisme à parallélogramme (12, 12').

6. Exosquelette selon la revendication 5, **caractérisé en ce que** le fil de tension (16, 16') a deux extrémités, et se raccorde sur une première extrémité des deux extrémités à un ressort (17, 17') monté sur le bâti (2), et **en ce que**, sur une seconde extrémité des deux extrémités, le fil de tension (16, 16') se raccorde à un bouton de réglage (18, 18').

7. Exosquelette selon l'une quelconque des revendications 1-6, **caractérisé en ce que** le montant mobile de haut en bas (3, 3') est guidé dans un palier linéaire (34, 34') monté sur le bâti de support (2), dans lequel de préférence le montant mobile de haut en bas (3, 3') est raccordé avec un fil de tension (16, 16') qui se raccorde à un ressort (17, 17') monté sur le montant mobile de haut en bas (3, 3').

8. Exosquelette selon la revendication 7, **caractérisé en ce que** le fil de tension (16, 16') est guidé sur au moins une roue de guidage (13, 14, 15 ; 13', 14', 15'), dans lequel ladite au moins une roue de guidage est montée sur un bras pivotant (19, 19') qui a une charnière (20, 20') qui se raccorde au montant mobile de haut en bas (3, 3') et ledit bras pivotant (19, 19') se raccorde avec une liaison (21, 21') au bâti de support (2) dans une position (22, 22') à distance de la charnière (20, 20') afin de fixer essentiellement ladite position (22, 22') dans la direction verticale en référence au bâti de support (2), dans lequel de préférence dans une position distante du ressort (17, 17'), le fil de tension (16, 16') est raccordé à un mécanisme de réglage (23, 23') pour régler une tension dans le fil de tension (16, 16').

9. Exosquelette selon la revendication 7, **caractérisé en ce que** le fil de tension (16, 16') est guidé sur au moins une roue de guidage (13, 13'), dans lequel ladite au moins une roue de guidage (13, 13') est montée sur le montant (3, 3'), ledit montant se raccorde à un bras de pivot et de coulissement (24, 24') qui a une charnière (25, 25') à distance du montant (3, 3') qui se raccorde au bâti de support (2) afin de fixer ladite charnière (25, 25') en référence au bâti de support (2).

10. Exosquelette selon l'une quelconque des revendications 1-9, **caractérisé en ce que** la construction de bras de support (6, 6') pour le bras de l'utilisateur est montée sur le bras horizontalement mobile (4, 4') par le biais d'une charnière et d'un adaptateur d'épaulement intermédiaire (26, 26'), lesquels charnière et adaptateur d'épaulement (26, 26') comprennent deux liaisons pliées articulées (27, 28 ; 27', 28') qui s'interconnectent avec une charnière centrale (29, 29'), et dans lequel lesdites liaisons pliées (27, 28 ; 27', 28') sur leurs côtés respectifs à distance de la charnière centrale (29, 29') sont chacune prévues avec une autre charnière (30, 31 ; 30', 31') qui fournit un raccordement pivotant avec le bras horizontalement mobile (4, 4') et la construction de bras de support (6, 6') respectivement, dans lequel les charnières sont de préférence verrouillables.

11. Exosquelette selon l'une quelconque des revendications 1-10, l'exosquelette étant **caractérisé en ce qu'**il est prévu avec deux montants, des bras mobiles horizontaux, et des constructions de bras de support qui sont prévues sur le bâti de support de manière spéculaire, et au moins un support de dos afin de proposer le fait que l'exosquelette peut supporter deux bras de l'utilisateur.

12. Exosquelette selon la revendication 11, **caractérisé en ce que** les deux bras horizontaux (4, 4') supportent l'au moins un support de dos (5, 5') et sont raccordés entre eux avec un connecteur de dos (32).

13. Exosquelette selon la revendication 12, **caractérisé en ce que** le connecteur de dos (32) a une longueur réglable.

14. Exosquelette selon l'une quelconque des revendications 3-13, **caractérisé en ce que** le ressort (11, 11') qui raccorde le membre (8, 8') qui est le plus éloigné du support de dos (5, 5') au bras horizontalement mobile (4, 4') a une forme de Y, dans lequel les branches (37, 37') du Y se raccordent au membre (8, 8') et l'autre côté (33) du Y se raccorde au bras horizontalement mobile (4, 4').

15. Exosquelette selon l'une quelconque des revendications 1-14, l'exosquelette (1) étant **caractérisé en ce qu'**il comprend uniquement des composants passifs.
